# EUROPÄISCHE PATENTANMELDUNG

(11) **EP 2 631 479 A2**
(43) Veröffentlichungstag der Anmeldung: **28.08.2013**
(21) Anmeldenummer: 13000280.1
(22) Anmeldetag: 19.01.2013
(51) Int. Cl.: F03D 11/04, F03D 1/00

(54) **Offshore-Plattform-Konstruktion sowie Verfahren zur Errichtung einer Offshore-Windturbinenstation**

(30) Priorität: 27.02.2012 DE 102012003572
(71) Anmelder: RWE Innogy GmbH, 45127 Essen (DE)
(72) Erfinder: Marchand, Aidan, 22299 Hamburg (DE)
(74) Vertreter: polypatent

(57) **Zusammenfassung**

Die Erfindung betrifft eine Offshore-Plattform-Konstruktion mit einer Gründungsstruktur (2) an wenigstens einer Übergangsstruktur für wenigstens ein Turmbauwerk (4), das wenigstens einen Windkraftgenerator aufnimmt, wobei sich die Konstruktion dadurch auszeichnet, dass die Gründungsstruktur (2) und die Übergangsstruktur jeweils ein Modul bilden und dass die Übergangsstruktur als wenigstens eine Plattform umfassendes, vorkonfektioniertes Funktionsmodul ausgebildet ist, welches die elektrischen Einrichtungen zum Betrieb der Plattform sowie die Schalteinrichtungen für den Windkraftgenerator umfasst.

## Beschreibung

Die Erfindung betrifft eine Offshore-Plattform-Konstruktion mit einer Gründungsstruktur und wenigstens einer Übergangsstruktur für wenigstens ein Bauwerk, insbesondere ein Turmbauwerk, das vorzugsweise wenigstens einen Windkraftgenerator aufnimmt.

Als Gründungsstruktur in diesem Sinne kommen sogenannte Monopiles, Tripiles, Jackets etc. in Betracht. Die Gründungsstruktur ist in der Regel mit einem oder mehreren Pfählen im Meeresboden verankert. Auf der Gründungsstruktur ist eine Übergangsstruktur angeordnet, die mit Anschlusseinrichtungen für ein Bauwerk versehen ist, die beispielsweise eine Stahl- oder Betonkonstruktion in Form eines Turms, eines Mastes oder dergleichen aufnehmen.

Das abliegende Ende des Turmbauwerks trägt beispielsweise einen Windgenerator mit einem Rotor.

Die Errichtung solcher Offshore-Windturbinenstationen beziehungsweise Offshore-Plattformen ist ein schwieriges und wetterabhängiges Unterfangen. Mit zunehmender Größe solcher Offshore-Plattform-Konstruktionen wird die Offshore-Montage aufwendiger. In der Regel werden für die Offshore-Montage verhältnismäßig teure Spezialschiffe benötigt. Darüber hinaus ist es erforderlich, größere Schönwetterperioden abzupassen. Je komplexer das Bauwerk ist, desto größer ist das für die Montage benötigte Zeitfenster und desto größer sind die erforderlichen Schönwetterperioden. Je länger die benötigten Montagezeiten offshore sind, desto größer sind die Risiken, denen die Montagemannschaft ausgesetzt ist und desto größer sind die Kosten für die Errichtung der Offshore-Plattform-Konstruktion.

Es ist daher Aufgabe der vorliegenden Erfindung, eine Offshore-Plattform der eingangs genannten Art bereitzustellen, die ihrer Natur nach so beschaffen ist, dass die Offshore-Montagezeiten minimiert werden.

Der Erfindung liegt weiterhin die Aufgabe zugrunde, ein Verfahren zur Errichtung einer Offshore-Windturbinenstation bereitzustellen, das der zuvor geschilderten Problematik Rechnung trägt.

Die Aufgabe wird gelöst durch eine Offshore-Plattform-Konstruktion mit einer Gründungsstruktur und wenigstens einer Übergangsstruktur für wenigstens ein Turmbauwerk, das wenigstens einen Windkraftgenerator aufnimmt, wobei sich die Offshore-Plattform-Konstruktion gemäß der Erfindung dadurch auszeichnet, dass die Gründungsstruktur und die Übergangsstruktur jeweils ein Modul bilden und dass die Übergangsstruktur als wenigstens eine Plattform umfassendes, vorkonfektioniertes Funktionsmodul ausgebildet ist, welches die elektrischen Einrichtungen zum Betrieb der Plattform sowie die Schalt- und Steuerungseinrichtungen für den Windkraftgenerator umfasst.

Insbesondere dadurch, dass die Übergangsstruktur erfindungsgemäß als vorkonfektioniertes Funktionsmodul ausgebildet ist, ist ein Auflegen und ein Terminieren der Leitungen für die elektrischen Einrichtungen zum Betrieb der Plattform sowie für die Schalteinrichtungen für den Windkraftgenerator grundsätzlich onshore möglich. Hierdurch wird erheblich an Offshore-Montagezeit eingespart. Es ist lediglich erforderlich, offshore die zum Anschluss des Windgenerators benötigten Seekabel einzuziehen und aufzulegen. Das Funktionsmodul kann bereits vollständig onshore auf Funktionsfähigkeit geprüft werden.

Unter einer Plattform im Sinne der vorliegenden Erfindung ist eine Versorgungsplattform für eine einzelne Windturbinenstation zu verstehen. Grundsätzlich kann die Versorgungsplattform auch als Versorgungsplattform für ein anderes Bauwerk oder eine andere Einrichtung ausgebildet sein, beispielsweise kann die Versorgungsplattform auch zur Aufnahme einer Umspanneinrichtung für mehrere Windturbinenstationen, als Förderplattform oder als Bohrplattform zur Niederbringung von Explorationsbohrungen und/oder Förderbohrungen ausgebildet sein.

Unter einer Gründungsstruktur im Sinne der Erfindung ist derjenige Teil der Tragstruktur der Offshore-Plattform-Konstruktion zu verstehen, welcher am Meeresboden verankert ist. Die Gründungsstruktur kann beispielsweise als Monopile, Tripile oder Jacket ausgebildet sein.

Unter einer Tragstruktur der Offshore-Plattform-Konstruktion wird im Allgemeinen und auch im Sinne der Erfindung die gesamte Anordnung umfassend die Gründungsstruktur, die Übergangsstruktur und beispielsweise das auf der Übergangsstruktur aufgesetzte Turmbauwerk bis zur Gondel eines Windkraftgenerators verstanden.

Zur Inbetriebnahme der in dem Funktionsmodul vorgesehenen Versorgungseinrichtungen und Schalteinrichtungen ist es lediglich erforderlich, die offshore eingezogenen Seekabel entsprechend aufzulegen. Hierfür ist zweckmäßigerweise an dem Funktionsmodul eine einzige Übergabestelle vorgesehen, so dass alsbald nach Montage der Gründungsstruktur und der Übergangsstruktur beispielsweise wesentliche Teile der Sicherheitseinrichtungen der Plattform sowie ggf. alle anderen elektrischen und hydraulischen Systeme der Plattform in Betrieb genommen werden können.

Durch die erfindungsgemäß vorgesehene Modularität der Plattformkonstruktion kann insbesondere die Anzahl der Bolzenverbindungen, die offshore herzustellen wären, minimiert werden. Darüber hinaus wird die Anzahl der Handhabungs- und Montagevorgänge von Einzelteilen minimiert.

Schließlich bietet die Ausbildung der Übergangsstruktur als vollständig konfektioniertes Funktionsmodul im Sinne eines funktionsfähigen Elektromoduls (inkl. Eines geeigneten MV/LV Transformators) den Vorzug, dass unmittelbar nach Aufstellung der Gründungsstruktur und der Übergangsstruktur sowie nach Einziehen von Seekabeln bereits eine Energieversorgung zur Durchführung weiterer Montagearbeiten sichergestellt werden kann. Die Betriebssicherheit der Plattform kann somit ohne eine mobile Dieselstromversorgung bereits während der Montagearbeiten gewährleistet sein. Über die dauerhafte Energieversorgung können Navigationseinrichtungen sowie Werkzeuge und sonstige Betriebssicherungsmittel für die Hauptplattform unmittelbar in Betrieb genommen werden.

Bei einer zweckmäßigen Variante der Offshore-Plattform-Konstruktion gemäß der Erfindung ist vorgesehen, dass die Gründungsstruktur wenigstens einen Installationstank mit wenigstens einer vorzugsweise seeseitigen Kabeleinführung aufweist.

Alternativ kann die Übergangsstruktur wenigstens einen Installationstank mit wenigstens einer vorzugsweise seeseitigen Kabeleinführung aufweisen. Die Kabelführung kann alternativ auch plattformseitig vorgesehen sein. Grundsätzlich ist es zweckmäßig, das Funktionsmodul ebenfalls modular und vorkonfektionierbar zu gestalten. Beispielsweise kann das Funktionsmodul als ein- oder mehrgeschossiges Segment mit Plattform ausgebildet sein, das onshore oder offshore auf Tragböden vormontierte Schalt- und Steuereinrichtungen aufnehmen kann.

Besonders vorteilhaft ist es, wenn das Funktionsmodul genau einen Gründungsanschluss und genau einen Bauwerksanschluss aufweist. Die Plattform beziehungsweise Hauptversorgungsplattform ist zweckmäßigerweise integraler Bestandteil der Übergangsstruktur beziehungsweise des Funktionsmoduls. Diese Anordnung hat den Vorzug, dass offshore lediglich ein Anschluss des Funktionsmoduls an die Gründungsstruktur sowie ein Anschluss des Bauwerks, beispielweise eines Turms, an die Übergangsstruktur hergestellt werden muss.

Grundsätzlich kann erfindungsgemäß allerdings auch vorgesehen sein, die Gründungsstruktur und die Übergangsstruktur einstückig vorgefertigt zu erstellen. Dabei können die Komponenten des Funktionsmoduls entweder vor Ort in der mechanisch tragenden Übergangsstruktur montiert werden oder alternativ als vormontierte Einheit offshore oder onshore in diese eingesetzt und befestigt werden. Offshore muss dann nur noch der Bauwerkanschluss hergestellt werden. Selbstverständlich muss die Gründungsstruktur mit der darauf befindlichen Übergangsstruktur zunächst auf dem Meeresboden verankert werden.

Bei einer besonders bevorzugten Variante der Offshore-Plattform-Konstruktion gemäß der Erfindung ist vorgesehen, dass das Funktionsmodul ein Turmübergangsstück, vorzugsweise in Form eines Turmübergangsrohres umfasst, das sich oberhalb der Plattform erstreckt. Auf diese Art und Weise lässt sich die Länge des vormontierbaren Teils der Offshore-Plattform-Konstruktion nochmals beachtlich erhöhen. Ein solches Turmübergangsstück kann integraler Bestandteil der Tragkonstruktion sein und sich deutlich über das Niveau der Plattform in die Höhe erstrecken. Das Turmübergangsstück kann Teile der Versorgungs- und Steuereinrichtungen sowie Schalteinrichtungen aufnehmen.

Insgesamt kann die Übergangsstruktur beziehungsweise das Funktionsmodul mehrgeschossig ausgebildet sein.

Bei einer anderen vorteilhaften Variante der Offshore-Plattform-Konstruktion gemäß der Erfindung ist vorgesehen, dass das Funktionsmodul Steuerungs- und Regelungs- und Versorgungseinrichtungen für den Betrieb der Plattform und ggf. für den Betrieb der Windturbinengeneratorgondel, insbesondere Navigationseinrichtungen und/oder wenigstens eine Kransteuerung und/oder eine Notspannungsversorgung und/oder eine Übergangsspannungsversorgung und/oder einen Transformator für eine Niederspannungsversorgung und/oder einen Transformator zur Erzeugung von Mittelspannung und/oder Mittel zur Klimatisierung der Aufstellungsumgebung umfasst.

Unter Steuerungs- und Regelungseinrichtungen im Sinne der Erfindung können beispielsweise Überwachungs-, Steuerungs- und Regeleinrichtungen für Navigationshilfen, Beleuchtung und dergleichen sowie Steuerungseinrichtungen für einen Kran, elektrische Winden und Aufzüge vorgesehen sein. Versorgungseinrichtungen im Sinne der Erfindung umfassen insbesondere die Niederspannungsversorgung für vorgenannte Verbraucher sowie für Klimatisierungsgeräte sowie Luftentfeuchter, die wegen der korrosiven Seeluft erforderlich sind.

Bei einer besonders zweckmäßigen Variante der Offshore-Plattform-Konstruktion gemäß der Erfindung ist die Gründungsstruktur als Gittergerüststruktur mit mehreren Verankerungsfüßen, das heißt als sogenanntes Jacket, ausgebildet.

Alternativ kann die Offshore-Plattform-Konstruktion als Gründungsstruktur auch eine sogenannte Monopile-, Tripod- oder Schwergewichtsstruktur umfassen.

Die Erfindung betrifft weiterhin ein Verfahren zur Errichtung einer Offshore-Plattform mit wenigstens einer Gründungsstruktur, wenigstens einer Übergangsstruktur, wenigstens einem Turmbauwerk und wenigstens einem Windkraftgenerator sowie wenigstens einem Rotor, wobei die Übergangsstruktur wenigstens ein Funktionsmodul umfasst oder als Funktionsmodul ausgebildet ist, wobei das Verfahren eine vollständige Vorkonfektionierung des Funktionsmoduls mit allen wesentlichen für den Betrieb einer Plattform erforderlichen Versorgungseinrichtungen und Schalteinrichtungen für den Windkraftgenerator umfasst und wobei die Leitungen der Versorgungs- und Schalteinrichtungen vor Errichtung der Konstruktion weitestgehend onshore terminiert und aufgelegt werden.

Zweckmäßigerweise erfolgt die Terminierung so, dass eine Funktionsprüfung der Versorgungs- und Schalteinrichtung onshore durchführbar ist.

Bei einer weiteren vorteilhaften Variante des Verfahrens gemäß der Erfindung ist vorgesehen, dass die Gründungsstruktur mit der Übergangsstruktur vormontiert zusammengefügt auf dem Meeresgrund verankert wird, wobei die Übergangsstruktur wenigstens eine Hauptversorgungsplattform umfasst und als Funktionsmodul ausgebildet ist.

Die Verankerung der Gründungsstruktur als Einheit mit der vormontierten Übergangsstruktur auf dem Meeresgrund ist insbesondere dann sinnvoll, wenn die Grundstruktur auf vorgefertigte Verankerungspunkte auf dem Meeresgrund aufgesetzt wird. Bei diesem sogenannten Prepiling sind bereits die Fundamentsockel in Form von Pfählen auf dem Meeresgrund gesetzt worden, auf welchen die Füße der Gründungsstruktur platziert und befestigt werden. In diesem Falle sind die Rammarbeiten zum Setzen der Fundamentsockel bereits abgeschlossen, so dass keine durch Rammarbeiten verursachten Vibrationen in die Grundstruktur eingeleitet und auf die Tragkonstruktion übertragen werden.

Zur Verankerung der Gründungsstruktur auf dem Meeresgrund werden zunächst beispielsweise mittels einer Schablone Pfähle in den Meeresgrund getrieben. An der Gründungsstruktur sind sogenannte Pilesleeves vorgesehen, welche auf die Pfähle aufgesetzt werden, so dass die Pfähle in die Pilesleeves getrieben werden. Diese Verbindung wird mit einer Vergussmasse abgedichtet (Grouting), alternativ kann beispielsweise die Gründungsstruktur mit daran angeordneten Pilesleeves auf den Meeresboden aufgesetzt werden. In diesem Falle werden die Pfähle durch die Pilesleeves getrieben.

Das Treiben der Pfähle in die Pilesleeves bei auf dem Meeresboden aufgesetzter Gründungsstruktur wird als Postpiling bezeichnet, das vorherige Setzen der Pfähle im Meeresboden wird als Prepiling bezeichnet.

Die der Erfindung zugrunde liegende Aufgabe wird weiterhin gelöst durch eine Offshore-Windturbinenstation in Modulbauweise mit einem Gründungsmodul, einem Plattformmodul, wenigstens einem Turmbauwerk, wenigstens einem Windkraftgenerator und wenigstens einem Rotor, wobei sich die Offshore-Windturbinenstation dadurch auszeichnet, dass wenigstens ein vorkonfektioniertes Funktionsmodul auf einer Außenplattform des Platfiformmoduls angeordnet ist.

Das Plattformmodul kann auch aus mehreren Teilmodulen zusammengesetzt sein.

Die Offshore-Windturbinenstation besteht vorzugsweise aus insgesamt nur fünf Modulen, nämlich der Gründungsstruktur, der Übergangsstruktur, dem Turmbauwerk, dem Windkraftgenerator und dem Rotor, wobei mehrere von diesen Modulen bereits vorkonfektioniert und vormontiert auf dem Meeresboden verankert werden können. Bevorzugt wird die Gründungsstruktur mit der Übergangsstruktur einstückig auf dem Meeresboden fixiert. Die

Übergangsstruktur umfasst eine Hauptversorgungsplattform, die integraler Bestandteil der Übergangsstruktur ist. Bei einer besonders bevorzugten Variante der zuvor beschriebenen Offshore-Windturbinenstation ist das Funktionsmodul als transportabler Behälter außerhalb des Bauwerks angeordnet.

Das Funktionsmodul kann beispielsweise als vorkonfektionierter Seecontainer ausgebildet sein, der onshore mit allen notwendigen Schalt- und Versorgungseinrichtungen versehen wurde und der nach teilweiser Errichtung der Station auf der Plattform absetzbar und anschließbar ist. Auf der Plattform können mehrere Funktionsmodulbehälter vorgesehen sein, die sich funktional ergänzen. Alternativ kann vorgesehen sein, auf diese Art und Weise ein weiteres Funktionsmodul als Ausfallreserve in einem Windpark oder onshore vorzuhalten. In diesem Fall kann auch die Kabelführung vereinfacht werden, z. B. an der Außenseite der Gründungsstruktur entlanglaufend (I-Rohr bzw. in regelmäßigen Abständen befestigte Kabelführungen).

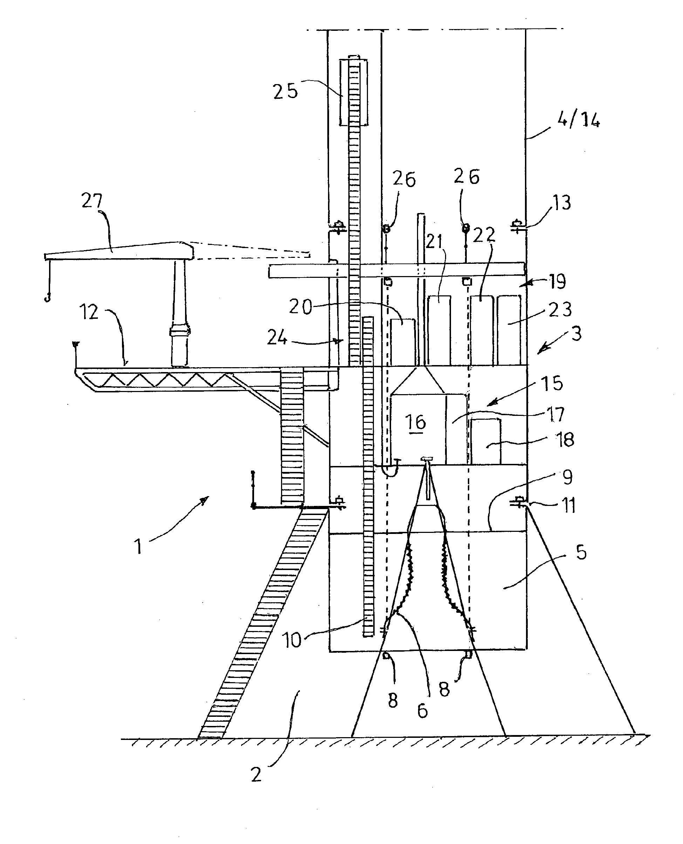

Die Erfindung wird nachstehend unter Bezugnahme auf ein in der Zeichnung dargestelltes Ausführungsbeispiel erläutert.

Die Figur zeigt eine Offshore-Windturbinenstation 1 gemäß der Erfindung, wobei aus Gründen der Vereinfachung der Windkraftgenerator und die Rotoreinheit nicht dargestellt sind.

Die Windturbinenstation 1 gemäß der Erfindung umfasst insgesamt fünf Module, umfassend die Gründungsstruktur 2 als sogenanntes Jacket, eine Übergangsstruktur in Form eines Funktionsmoduls 3, ein Turmbauwerk 4, einen Windkraftgenerator sowie einen Rotor.

Die Gründungsstruktur 2, die als Gittergerüststruktur mit den nicht dargestellten, auf dem Meeresgrund verankerten Gründungsfüßen versehen ist, ist, wie vorstehend beschrieben, zusammen mit dem auf der Gründungsstruktur bereits aufgesetzten Funktionsmodul auf vorher im Meeresboden gesetzten Fundamentpfählen fixiert worden. Die Gründungsstruktur 2 umfasst einen Installationstank 5, in welchem Seekabel 6 durch sogenannte J-Rohre 7 eingezogen wurden. In dem Installationstank 5 sind bodenseitig zwei Kabeleinführungen 8 für die Seekabel 6 vorgesehen. In den Kabeleinführungen 8 können beispielsweise Mittel zur Abhängung der Seekabel 6 in einem Klemmsitz vorgesehen sein. Der Installationstank 5 kann weiterhin diverse Einrichtungen zur Fixierung von vereinzelten Kabeln aufweisen. Dieser kann beispielsweise entsprechende Leiterbaumkonstruktionen zur Kabelfixierung umfassen, die hier nicht näher bezeichnet sind.

In dem Installationstank 5 ist eine Arbeitsbühne 9 vorgesehen, die über eine Leiter 10 begehbar ist.

Die Gründungsstruktur 2 umfasst einen umlaufenden Gründungsflansch 11, auf den das Funktionsmodul 3 aufgeflanscht ist. Alternativ kann die Gründungsstruktur 2 an das Funktionsmodul 3 angeschweißt oder angegossen (z. B. im Fall einer Betonstruktur) sein.

Das Funktionsmodul 3 gemäß Ausführungsbeispiel ist als insgesamt zweigeschossige Übergangsstruktur ausgebildet, die eine einstückig angeformte umlaufende Versorgungsplattform 12 aufweist. Es ist für den Fachmann ersichtlich, dass das Funktionsmodul 3 auch nur eingeschossig ausgebildet sein kann oder mehr als zwei Geschosse umfassen kann. Im einfachsten Fall kann das Funktionsmodul 3 als Aufnahmebehälter mit in diesem auf Bühnen vormontierten und vorkonfektioniert eingesetzten Installationseinrichtungen ausgebildet sein.

An seinem oberen Ende ist das Funktionsmodul 3 mit einem umlaufenden Turmflansch 13 versehen, auf den ein erstes Turmsegment 14 aufgesetzt ist. Die Ebene der Versorgungsplattform 12 definiert die Höhe eines Untergeschosses 15 des Funktionsmoduls 3, in welcher eine Schalteinrichtung 16, ein Niederspannungstransformator 17 sowie eine Überwachungs- , Steuerungs- und Regelungseinrichtung 18 angeordnet sind. In einem darüber befindlichen Obergeschoss 19 des Funktionsmoduls 3 sind ein Luftentfeuchter 20, eine Steuerung 21 für den Windgenerator eine Kransteuerung 22 und Navigationseinrichtungen 23 angeordnet.

Darüber hinaus ist in dem Obergeschoss 19 eine Liftstation 24 für einen in dem Turmbauwerk 4 verfahrbaren Lift 25 vorgesehen.

Die gesamte Anordnung bestehend aus Gründungsstruktur 2 und Funktionsmodul 3 wird vorzugsweise vorkonfektioniert und vormontiert auf dem Meeresboden abgesetzt. Sodann werden die Seekabel 6 eingezogen und jeweils an Übergabepunkten 26 auf der Höhe des Turmflansches 13 sowie an dem Niederspannungstransformator 20 aufgelegt. Mit dem Anschließen des Niederspannungstransformators 20 ist die gesamte Versorgungsplattform 12 mitsamt vorgesehener Navigationseinrichtungen sowie Signalbeleuchtung etc. funktionsfähig. Ein auf der Versorgungsplattform 12 vorgesehener Kran 27 wird nachträglich aufgesetzt oder vormontiert.

### Bezugszeichenliste

- 1.: Windturbinenstation
- 2.: Gründungsstruktur
- 3.: Funktionsmodul
- 4.: Turmbauwerk
- 5.: Installationstank
- 6.: Seekabel
- 7.: J-Rohre
- 8.: Kabeleinführungen
- 9.: Arbeitsbühne
- 10.: Leiter
- 11.: Gründungsflansch
- 12.: Versorgungsplattform
- 13.: Turmflansch
- 14.: Turmsegment
- 15.: Untergeschoss
- 16.: Schalteinrichtung
- 17.: Niederspannungstrafo
- 18.: Überwachungs-Steuerungs-Regelungseinrichtung
- 19.: Obergeschoss
- 20.: Niederspannungstransformator
- 21.: Steuerung-Windgenerator
- 22.: Kransteuerung
- 23.: Navigationseinrichtungen
- 24.: Liftstationen
- 25.: Lift
- 26.: Übergabepunkte
- 27.: Kran

## Patentansprüche

1. Offshore-Plattform-Konstruktion mit einer Gründungsstruktur (2), wenigstens einer Übergangsstruktur für wenigstens ein Bauwerk, insbesondere für ein Turmbauwerk (4), das vorzugsweise wenigstens einen Windkraftgenerator aufnimmt, **dadurch gekennzeichnet, dass** die Gründungsstruktur (2) und die Übergangsstruktur wenigstens ein Modul bilden und dass die Übergangsstruktur als wenigstens eine Plattform umfassendes vorkonfektioniertes Funktionsmodul (3) ausgebildet ist, welches die elektrischen Einrichtungen zum Betrieb der Plattform sowie Schalteinrichtungen für den Windkraftgenerator umfasst.

2. Offshore-Plattform-Konstruktion nach Anspruch 1, **dadurch gekennzeichnet, dass** die Gründungsstruktur (2) wenigstens einen Installationstank (7) mit jeweils einer vorzugsweise seeseitigen Kabeleinführung (8) aufweist.

3. Offshore-Plattform-Konstruktion nach Anspruch 1, **dadurch gekennzeichnet, dass** die Übergangsstruktur wenigstens einen Installationstank (7) mit einer vorzugsweise seeseitigen Kabeleinführung (8) aufweist.

4. Offshore-Plattform-Konstruktion nach Anspruch 1 oder 3, **dadurch gekennzeichnet, dass** das Funktionsmodul (3) genau einen Gründungsanschluss und genau einen Bauwerksanschluss aufweist.

5. Offshore-Plattform-Konstruktion nach einem der Ansprüche 1 bis 4,
**dadurch gekennzeichnet, dass** das Funktionsmodul (3) ein Turmübergangsstück, vorzugsweise in Form eines Turmübergangsrohres umfasst, das sich oberhalb der Plattform erstreckt.

6. Offshore-Plattform-Konstruktion nach einem der Ansprüche 1 bis 5,
**dadurch gekennzeichnet, dass** das Funktionsmodul (3) Steuerungs- und Regelungs- und Versorgungseinrichtungen für den Betrieb der Plattform insbesondere Navigationseinrichtungen (23) und/oder wenigstens eine Kransteuerung (22) und/oder eine Notspannungsversorgung und/oder eine Übergangsspannungsversorgung und/oder einen Transformator für eine Niederspannungsversorgung und/oder einen Transformator zur Erzeugung von Mittelspannung und/oder Mittel zur Klimatisierung der Aufstellungsumgebung umfasst.

7. Offshore-Plattform-Konstruktion nach Anspruch 6, **dadurch gekennzeichnet, dass** die Gründungsstruktur (2) als Gittergerüststruktur (Jacket) mit mehreren Verankerungsfüßen ausgebildet ist.

8. Verfahren zur Einrichtung einer Windturbinenstation mit wenigstens einer Gründungsstruktur (2), wenigstens einer Übergangsstruktur, wenigstens einem Turmbauwerk (4) und wenigstens einem Windkraftgenerator sowie wenigstens einem Rotor, wobei die Übergangsstruktur ein Funktionsmodul (3) umfasst, oder als Funktionsmodul (3) ausgebildet ist, wobei das Verfahren eine vollständige Vorkonfektionierung des Funktionsmoduls (3) mit allen wesentlichen für den Betrieb der Plattform erforderlichen Versorgungseinrichtungen und Schalteinrichtungen für den Windkraftgenerator umfasst und wobei die Leitungen der Versorgungs- und Schalteinrichtungen vor Errichtung der Konstruktion weitestgehend onshore terminiert und aufgelegt werden.

9. Verfahren nach Anspruch 8, **dadurch gekennzeichnet, dass** die Terminierung so erfolgt, dass eine Funktionsprüfung der Versorgungs- und Schalteinrichtungen onshore durchführbar ist.

10. Verfahren nach einem der Ansprüche 7 oder 8, **dadurch gekennzeichnet, dass** die Gründungsstruktur mit der Übergangsstruktur vormontiert zusammengefügt auf dem Meeresboden verankert wird, wobei die Übergangsstruktur eine Hauptversorgungsplattform umfasst und als Funktionsmodul (3) ausgebildet ist.

11. Verfahren nach einem der Ansprüche 7 bis 10, **dadurch gekennzeichnet, dass** die Gründungsstruktur (2) auf vorgefertigte Verankerungspunkte auf dem Meeresgrund aufgesetzt wird (prepiling).

12. Offshore-Windturbinenstation in Modulbauweise mit einem Gründungsmodul, einem Plattformmodul, wenigstens einem Turmbauwerk, wenigstens einem Windkraftgenerator und wenigstens einem Rotor, **dadurch gekennzeichnet, dass** wenigstens ein vorkonfektioniertes Funktionsmodul auf einer Außenplattform des Plattformmoduls angeordnet ist.

13. Offshore-Windturbinenstation nach Anspruch 12, **dadurch gekennzeichnet, dass** das Funktionsmodul als transportabler Behälter außerhalb des Bauwerks angeordnet ist.
